# EUROPEAN PATENT SPECIFICATION

(11) **EP 3 394 383 B1**
(45) Date of publication and mention of the grant of the patent: **23.07.2025**
(21) Application number: 16879442.8
(22) Date of filing: 28.11.2016
(51) Int. Cl.: G01F 22/02, G01M 3/28, E21B 47/04, E21B 47/10

(54) **PORTABLE ARRANGEMENT FOR AUTOMATICAL ANNULUS TESTING**
TRAGBARE ANORDNUNG ZUR AUTOMATISCHEN RINGRAUMPRÜFUNG
SYSTÈME PORTATIF DESTINÉ AU TEST AUTOMATIQUE D'ESPACE ANNULAIRE

(30) Priority: 21.12.2015 NO 20151763
(43) Date of publication of application: 31.10.2018
(73) Proprietor: 4Subsea AS, 5235 Radal (NO)
(72) Inventor: BERENTSEN, Einar, 0488 Oslo (NO); WICKMANN, Carl Olav, 5224 Nesttun (NO); SOLBERG, Eirik A., 5096 Bergen (NO); TVEDT, Henrik, 5019 Bergen (NO)
(74) Representative: Walker-Smith, Samantha Lynelle Zhi
(86) International application number: PCT/NO2016/050242
(87) International publication number: WO 2017/111608

(56) References cited:
- WO-A1-2009/094630
- WO-A1-2009/094630
- WO-A1-2010/151144
- WO-A1-2014/000760
- WO-A1-2016/007017
- WO-A1-2016/007017
- WO-A2-2010/036792
- FLEXLIFE: "Flexlife annulus testing", 25 August 2014 (2014-08-25), XP055602654, Retrieved from the Internet <URL:https://www.youtube.com/watch?v=nHpAZbFCBGw> [retrieved on 20190704]
- ROBBY O ' SULLIVAN: "Monitoring of Flexible Pipes State of the Art", 11 June 2014 (2014-06-11), XP055602655, Retrieved from the Internet <URL:https://www.sut.org/wp-content/uploads/2014/09/Robby-OSullivan-SUT-Monitoring-Presenation-June-2014-WEB-VERSION.pdf> [retrieved on 20190704]
- J. SMITH FRANCK: "UKOOA Guidance Note on Monitoring Methods and Integrity Assurance for Unbonded Flexible Pipe", 8 October 2002 (2002-10-08), pages 1 - 64, XP055590832, Retrieved from the Internet <URL:https://www.ukooa.co.uk/issues/fpso/docs/guidancenoterev05.pdf> [retrieved on 20190522]
- BONDEVIK JON OLAV ET AL: "Annulus testing for condition assessment and monitoring of flexible pipes", 22 December 2008 (2008-12-22), pages 1 - 6, XP093195609, Retrieved from the Internet <URL:https://asmedigitalcollection.asme.org/OMAE/proceedings-abstract/OMAE2004/37432/763/304197>
- GREGOIRE AUDOUIN ET AL.: "Flexible Pipe Integrity Monitoring: A New System to Assess the Flexible Pipe Annulus Condition''.", PROCEEDINGS OF OFFSHORE TECHNOLOGY CONFERENCE, 3 May 2010 (2010-05-03), pages 1 - 8, XP055054466

## Description

### TECHNICAL AREA

The present invention is a portable arrangement for automatically annulus free volume testing. More specifically the invention is a portable arrangement for determination of annulus free volume of a flexible pipe using an automated sequence. More specifically, the invention is a portable automated unit for determination of an annulus free volume of an annulus volume in a riser.

### INVENTION BACKGROUND

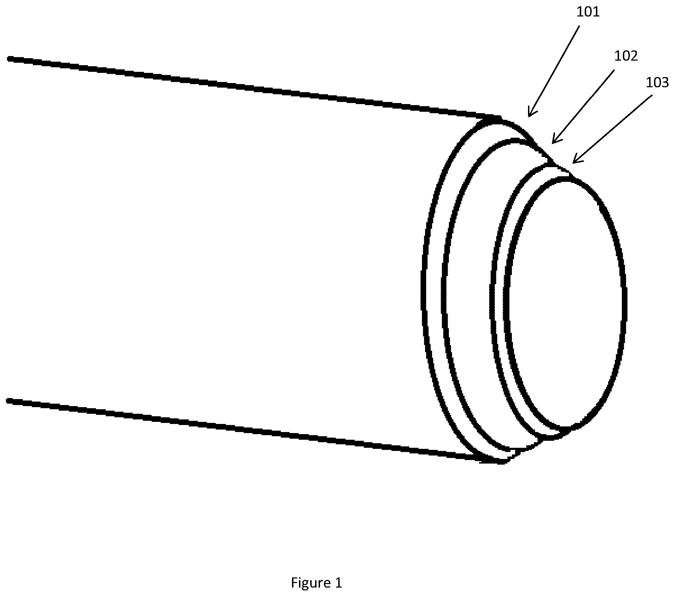

Monitoring and integrity evaluation are performed to control and map the condition and quality of the annulus volume, typically in a flexible riser or flowline. As shown in figure 1, the annulus volume 102 in a flexible pipe is defined as the volume between the outer sheath 101 and the pressure barrier 103. Annulus testing for determining the annulus free volume is a significant part of evaluating the pipe integrity.

Based on such an annulus test, the pipe integrity can be evaluated by comparing the measured annulus free volume and knowledge of the total annulus volume. The annulus volume in a flexible pipe is expected to be dry or experience a slow filling with time due to for instance diffusion through the pipe pressure barrier. Annulus free volume can be defined as the remaining free volume of the total annulus volume that is not filled with liquid.

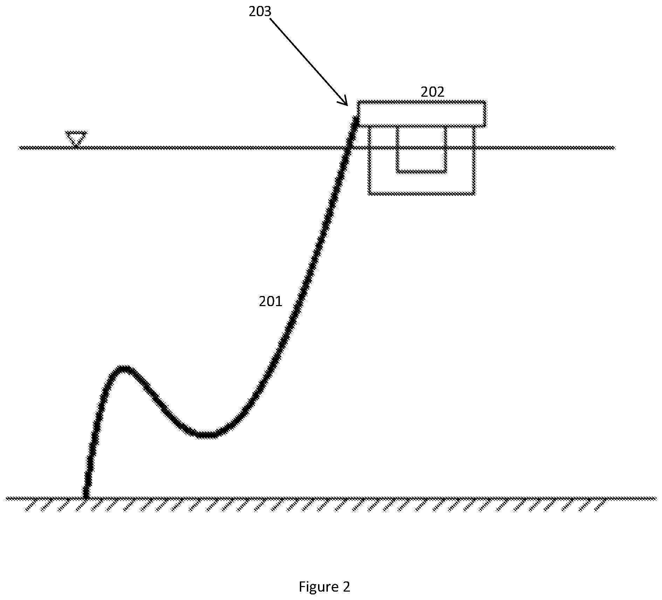

Annulus free volume testing, hereafter referred to as annulus testing, of flexible risers is today typically performed annually at offshore installations using specialist personnel. Figure 2 shows an example sketch of a typical offshore installation which comprises a flexible riser 201, a platform 202 and a test location 203. The annulus testing of the flexible riser 201 is typically performed at test location 203.

As per today the annulus testing is typically performed manually, which requires specially trained personnel offshore to perform the test procedure. Thus, the testing is costly and prone to human errors and variations. Limited availability of specially trained personnel can also result in integrity tests not being performed as frequent as intended or according to schedule.

Systems for automatic measurement of annulus volumes of flexible risers exist. These systems are limited in functionality by not being portable due to physical and installation characteristics. These systems are designed for permanent installation and for monitoring of a dedicated riser, i.e. the systems are not portable.

The duration of the annulus test has correlation with the differential pressure in riser annulus during testing. If a more accurate test method is present, the differential pressure can be lowered, thus reducing test duration. The manually performed annulus test normally requires a relatively long test duration to compensate for low data analysis capability and accuracy.

WO 2009/094630 A1 describes a method and system for monitoring a flexible pipe, including an inline sensor system coupled to the annulus of the flexible pipe to detect corrosion of the flexible pipe. Also described are a method and system for monitoring an amount of water being accumulated in an annulus of a flexible pipe, including collecting, with a microprocessor, pressure and flow measurement data from pressure and flow measurement systems for determining the amount of water accumulated in the annulus based on the collected pressure and flow measurement data. Flexlife: *"Flexlife annulus testing"* (retrieved from the URL:https://www.youtube. com/watch?v =nHpAZbFCBGw) shows a method and system for determining riser outer sheath integrity, splash zone damage and annulus permeation levels.

The document "Annulus testing for condition assessment and monitoring of flexible pipes" from Bondevik Jon Olav ET AL (Retrieved from the Internet: URL:https://asmeditigalcollection.asme.org/OMAE/proceedings-abstract/OMAE2004/37432/763/304197) also shows methods and systems to determine the free annulus volume of a riser.

Hence, there is a need for an arrangement for determination of annulus volume that avoids the above mentioned problems.

Therefore, it is an object of the present invention to provide an apparatus for annulus testing that is fully automated.

Another object of the present invention is to provide an apparatus that can be transported with ease and requires simple mounting.

Yet another object of the present invention is to provide an apparatus that is flexible such that it does not require a permanent installation.

Yet another object of the present invention is to provide an apparatus that are efficient in order to reduce the test duration.

### SUMMARY OF THE INVENTION

According to the present invention, the above mentioned problems are solved by an arrangement for portable and automatic determination of a riser's annulus free volume. The invention is set out in the appended set of claims.

The present invention relates to a portable automated unit for determination of an annulus free volume of an annulus volume in a riser, the annulus volume being defined as the volume between an outer sheath of the riser and an inner pressure barrier of the riser, and the annulus free volume being defined as the volume that is not occupied or filled with liquid. Which portable automated unit comprises:
- a portable container having a riser outlet / inlet configured to connect the container with the annulus volume,
- at least one flow arrangement for flow measurement,
- at least one valve connected between the annulus volume and the flow arrangement for pressurization and/or depressurization of the annulus volume,
- at least one pressure instrument connected between the annulus volume and the at least one valve, and
- at least one logic unit.

The at least one flow arrangement, the at least one valve, the at least one pressure instrument and the at least one logic unit are fitted within the portable container. The at least one flow arrangement is situated in line with a gas flow direction between the riser outlet/inlet and an outlet/inlet of the portable automated unit, and is arranged for introducing a pressure into the annulus volume via the riser outlet/inlet for pressurization of the annulus volume, and
wherein the at least one logic unit is arranged to read off the at least one pressure instrument, read off and control the at least one valve and read off the at least one flow arrangement, and wherein the at least one logic unit is configured to calculate the annulus free volume based on the introduced pressure difference in annulus volume and the amount of gas added or removed from the annulus volume.

The portable automated unit is configured to automatically perform a determination of the annulus free volume when connected to the annulus volume and a test sequence is initiated.

The arrangement is portable, by the meaning of one or more unit(s) that can be transported with ease to the desired location, and requires only simple mounting. This is made possible by fitting the entire arrangement for automatic annulus testing into one or more portable unit(s).

In the preferable embodiment of the present invention the arrangement is fitted into one portable unit. However, it is possible in some examples, not according to the claimed invention, to divide the components inside arrangement into more portable units.

The system is fully automated, meaning that the unit will automatically perform the annulus volume test when the system is connected, and test sequence is initiated.

According to the invention, the at least one flow arrangement is arranged for pressurization and / or depressurization of the annulus volume. Preferably, the at least one flow arrangement is arranged for introducing a pressure into the annulus volume for pressurization of the annulus volume. More preferably, the media for introducing a pressure into the annulus is a feed gas or diffused gas.

Also within the scope of the invention, a vacuum can also be used to lower the pressure in the riser annulus volume in order to measure the annulus free volume.

Further, the at least one flow arrangement is situated in line with the gas flow direction between the annulus volume and the outlet/inlet or after the outlet/inlet.

According to the invention, the at least one pressure instrument is connected between the at least one valve and the annulus volume.

The arrangement includes at least one logical unit for controlling at least one valve, reading pressure from at least one pressure instrument and calculating at least one annulus free volume. However, it is possible in some examples, not according to the claimed invention, to control one or more of the arrangement components manually. The arrangement further includes at least one instrument for measuring amount of gas added or removed from the riser annulus.

In another embodiment of the present invention, the portable unit can be used for flow rate measurement of the diffused gas from the annulus volume.

The arrangement is connected to the pipe annulus, and introduces a pressure difference in the annulus. The arrangement calculates the annulus free volume based on the introduced pressure difference in riser annulus and the amount of gas which is removed or added in the annulus volume.

The invention is also related to a method of determination of an annulus free volume in a riser, by use of the portable automated unit according to claim 1-4. Wherein the method comprises the step of:
- Transporting the portable automated unit to an offshore installation.
- Connecting the automated portable unit to an annulus volume of the riser.
- Introducing a pressure into the annulus volume by means of the flow arrangement.
- Reading the measured free annulus volume on a display.

### FIGURE DESCRIPTION

- Figure 1: shows the cross section of a flexible riser.
- Figure 2: shows an example of an offshore installation which comprises a flexible pipe, in this case a flexible riser.
- Figure 3: shows an arrangement for automated portable annulus testing and / or monitoring of the integrity of at least one annulus volume.
- Figure 4a: shows a portable arrangement for automated annulus testing and / or monitoring of the integrity of at least one annulus volume. Figure 4a illustrates isometric view with open lid.
- Figure 4b: shows a portable arrangement for automated annulus testing and / or monitoring of the integrity of at least one annulus volume. Figure 4b illustrates front view with open lid.
- Figure 4c: shows a portable arrangement for automated annulus testing and / or monitoring of the integrity of at least one annulus volume. Figure 4c illustrates top view with open lid.

All figures are schematic and not to scale, and they show only the parts necessary to illustrate the invention, other parts are omitted or merely indicated.

### INVENTION DESCRIPTION

The solution according to the present invention is achieved by an arrangement in accordance to the characterizing part of the independent claim.

The present invention is related to an arrangement for portable and automatic determination of a flexible riser's annulus free volume. The annulus testing is performed by use of a logic unit which controls the sequence of opening and closing at least one valve, and based on acquired pressure readings, calculates the annulus free volume.

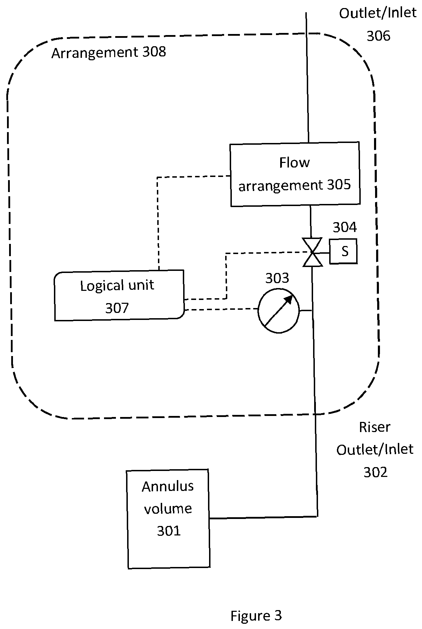

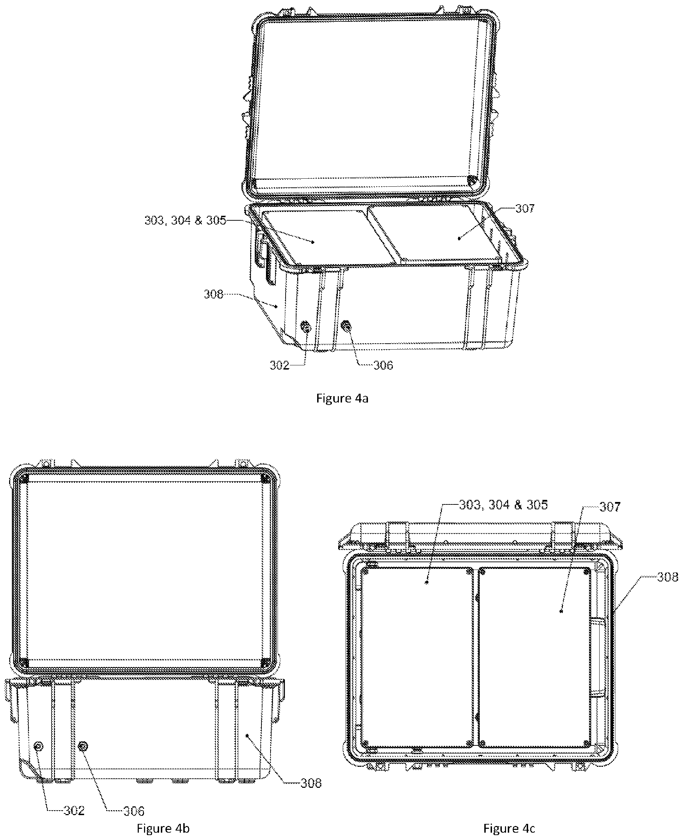

The arrangement typically comprises, not limited by, the components inside container 308 in figure 3, figure 4a, figure 4b and figure 4c; at least one flow arrangement 305 for flow measurement, at least one valve 304 connected to at least one annulus volume 102 and the at least one flow arrangement 305 for pressurization and / or depressurization of the annulus volume 102, at least one pressure instrument 303 for pressure measurement of the annulus volume 102, where a logic unit 307 is arranged to read off at least one pressure instrument 303, read off and control at least one valve 304 and read off at least one flow arrangement 305, and calculate the annulus free volume 301 based on pressure measurement and flow measurements, all components fitted into one portable unit 308 (for example, as shown in figure 4a, figure 4b and figure 4c).

In the claimed invention, the system is fully automated, and the arrangement will automatically perform the annulus free volume test when the system is connected, and test sequence is initiated.

The portable arrangement 308 can measure annulus volume 301 using a gas feed or using diffused gas to achieve a pressure build-up in the riser annulus 102 . Alternatively, the portable arrangement 308 can measure annulus volume 301 using vacuum. Gas is then removed from riser annulus 102 by introducing a subatmospheric pressure in the riser annulus 102.

In the preferable embodiment of the present invention the arrangement 308 is fitted into one portable unit. However, it is possible in some examples, not according to the claimed invention, to divide the components inside arrangement 308 into more portable units.

Also, in the preferable embodiment of the present invention the arrangement 308 is controlled by use of a logical unit 307. However, it is possible in some examples, not according to the claimed invention, to control one or more of the arrangement 308 components manually.

In another embodiment of the present invention, the portable arrangement can be used for flow rate measurement of the diffused gas from the annulus volume 102.

In another embodiment of the present invention, the portable arrangement 308 calculates the annulus free volume 301 and shows the result on a display connected to the logical unit 307.

## Claims

1. A portable automated unit (308) for determination of an annulus free volume (301) of an annulus volume (102) in a riser (201), the annulus volume (102) being defined as the volume between an outer sheath (101) of the riser and an inner pressure barrier (103) of the riser, and the annulus free volume being defined as the volume that is not occupied or filled with liquid,
which portable automated unit comprises:
- a portable container (308) having a riser outlet/inlet (302) configured to connect the container (308) with the annulus volume (102),
- at least one flow arrangement (305) for flow measurement, wherein the flow arrangement (305) is situated in line with a gas flow direction between the riser outlet/inlet (302) and an outlet/inlet (306) of the portable automated unit (308), wherein the at least one flow arrangement (305) is further configured to introduce a pressure into the annulus volume (102) via the riser outlet/inlet (302) for pressurization of the annulus volume (102),
- at least one valve (304) connected between the annulus volume (102) and the flow arrangement (305) for pressurization and/or depressurization of the annulus volume (102),
- at least one pressure instrument (303) connected between the annulus volume (102) and the at least one valve (304), and
- at least one logic unit (307),
wherein the at least one flow arrangement (305), the at least one valve (304), the at least one pressure instrument (303) and the at least one logic unit (307) are fitted within the portable container (308); and wherein the at least one logic unit (307) is configured to read off the at least one pressure instrument (303), to read off and control the at least one valve (304) and to read off the at least one flow arrangement (305), and wherein the at least one logic unit (307) is configured to calculate the annulus free volume (301) based on the introduced pressure difference in annulus volume (102) and the amount of gas added or removed from the annulus volume (102); and
wherein the portable automated unit is configured to automatically perform a determination of the annulus free volume when connected to the annulus volume and a test sequence is initiated.

2. The unit (308) according to claim 1,
**characterized in that** said portable automated unit comprises a display connected to the logical unit (307), which display shows the measured data and displays the calculated annulus free volume (301).

3. The unit (308) according to any one of the preceding claims,
**characterized in that** the unit (308) measures annulus free volume (301) using a gas feed or diffused gas to increase the pressure in the riser annulus volume (102).

4. The unit (308) according to any one of the preceding claims,
**characterized in that** the unit (308) is used for a flow rate measurement of the amount of a diffused gas from the annulus volume (102).

5. A method of determination of an annulus free volume (301) in a riser (201) by use of the portable automated unit (308) according to claim 1-4,
wherein the method comprises the steps of;
- transporting the said portable automated unit (308) to an offshore installation,
- connecting the automated portable unit (308) to an annulus volume (102) of the riser,
- introducing a pressure into the annulus volume (102) via the riser outlet / inlet (302) by means of the flow arrangement (305) fitted within the portable automated unit container (308),
- reading the measured free annulus volume (301) on a display.

## Patentansprüche

1. Tragbare automatisierte Einheit (308) zum Bestimmen eines freien Ringvolumens (301) eines Ringvolumens (102) in einer Steigleitung (201), wobei das Ringvolumen (102) als das Volumen zwischen einer Außenhülle (101) der Steigleitung und einer inneren Druckbarriere (103) der Steigleitung definiert ist und das freie Ringvolumen als das Volumen definiert ist, das nicht mit Flüssigkeit belegt oder gefüllt ist,
wobei die tragbare automatisierte Einheit Folgendes umfasst:
- einen tragbaren Behälter (308) mit einem Steigleitungsauslass/-einlass (302), der dazu konfiguriert ist, den Behälter (308) mit dem Ringvolumen (102) zu verbinden,
- mindestens eine Durchflussanordnung (305) zur Durchflussmessung, wobei die Durchflussanordnung (305) in einer Linie mit einer Gasströmungsrichtung zwischen dem Steigleitungsauslass/-einlass (302) und einem Auslass/Einlass (306) der tragbaren automatisierten Einheit (308) angeordnet ist, wobei die mindestens eine Durchflussanordnung (305) ferner dazu konfiguriert ist, über den Steigleitungsauslass/-einlass (302) einen Druck in das Ringvolumen (102) einzubringen, um das Ringvolumen (102) unter Druck zu setzen,
- mindestens ein zwischen dem Ringvolumen (102) und der Durchflussanordnung (305) angeschlossenes Ventil (304) zur Druckbeaufschlagung und/oder Druckentlastung des Ringvolumens (102),
- mindestens ein Druckmessgerät (303), das zwischen dem Ringvolumen (102) und dem mindestens einen Ventil (304) angeschlossen ist, und
- mindestens eine Logikeinheit (307),
wobei die mindestens eine Durchflussanordnung (305), das mindestens eine Ventil (304), das mindestens eine Druckmessgerät (303) und die mindestens eine Logikeinheit (307) in dem tragbaren Behälter (308) eingebaut sind; und
wobei die mindestens eine Logikeinheit (307) dazu konfiguriert ist, das mindestens eine Druckmessgerät (303) abzulesen, das mindestens eine Ventil (304) abzulesen und zu steuern und die mindestens eine Durchflussanordnung (305) abzulesen, und wobei die mindestens eine Logikeinheit (307) dazu konfiguriert ist, das freie Ringvolumen (301) basierend auf der eingebrachten Druckdifferenz im Ringvolumen (102) und der Menge an Gas zu berechnen, die dem Ringvolumen (102) hinzugefügt oder daraus entfernt wird; und
wobei die tragbare automatisierte Einheit dazu konfiguriert ist, automatisch eine Bestimmung des freien Ringvolumens durchzuführen, wenn sie mit dem Ringvolumen verbunden ist und eine Testsequenz eingeleitet wird.

2. Einheit (308) nach Anspruch 1,
**dadurch gekennzeichnet, dass** die tragbare automatisierte Einheit ein mit der Logikeinheit (307) verbundenes Display umfasst, welches die gemessenen Daten und das berechnete freie Ringvolumen (301) anzeigt.

3. Einheit (308) nach einem der vorstehenden Ansprüche,
**dadurch gekennzeichnet, dass** die Einheit (308) das freie Ringvolumen (301) unter Verwendung einer Gaszufuhr oder eines diffundierten Gases zur Erhöhung des Drucks im Ringvolumen (102) der Steigleitung misst.

4. Einheit (308) nach einem der vorstehenden Ansprüche,
**dadurch gekennzeichnet, dass** die Einheit (308) für eine Durchflussmengenmessung der aus dem Ringvolumen (102) diffundierten Gasmenge verwendet wird.

5. Verfahren zum Bestimmen eines freien Ringvolumens (301) in einer Steigleitung (201) unter Verwendung der tragbaren automatisierten Einheit (308) nach den Ansprüchen 1 bis 4,
wobei das Verfahren die folgenden Schritte umfasst:
- Transportieren der tragbaren automatisierten Einheit (308) zu einer Offshore-Anlage,
- Verbinden der automatisierten tragbaren Einheit (308) mit einem Ringvolumen (102) der Steigleitung,
- Einbringen eines Drucks in das Ringvolumen (102) über den Steigleitungsauslass/-einlass (302) mittels der Durchflussanordnung (305), die in den tragbaren automatisierten Einheitsbehälter (308) eingebaut ist,
- Ablesen des gemessenen freien Ringvolumens (301) auf einer Anzeige.

## Revendications

1. Unité automatisée portable (308) permettant la détermination d'un volume libre d'espace annulaire (301) d'un volume d'espace annulaire (102) dans une colonne montante (201), le volume d'espace annulaire (102) étant défini comme le volume entre une gaine extérieure (101) de la colonne montante et une barrière de pression intérieure (103) de la colonne montante, et le volume libre d'espace annulaire étant défini comme le volume qui n'est pas occupé ou rempli de liquide, laquelle unité automatisée portable comprend :
- un conteneur portable (308) ayant une sortie/entrée de colonne montante (302) conçue pour relier le conteneur (308) au volume d'espace annulaire (102),
- au moins un agencement d'écoulement (305) pour une mesure d'écoulement, dans laquelle l'agencement d'écoulement (305) est situé en ligne avec une direction d'écoulement de gaz entre la sortie/l'entrée de colonne montante (302) et une sortie/entrée (306) de l'unité automatisée portable (308), dans laquelle l'au moins un agencement d'écoulement (305) est en outre conçu pour introduire une pression dans le volume d'espace annulaire (102) par l'intermédiaire de la sortie/l'entrée de colonne montante (302) pour la pressurisation du volume d'espace annulaire (102),
- au moins une vanne (304) reliée entre le volume d'espace annulaire (102) et l'agencement d'écoulement (305) pour la pressurisation et/ou la dépressurisation du volume d'espace annulaire (102),
- au moins un instrument de pression (303) relié entre le volume d'espace annulaire (102) et l'au moins une vanne (304), et
- au moins une unité logique (307), dans laquelle l'au moins un agencement d'écoulement (305), l'au moins une vanne (304), l'au moins un instrument de pression (303) et l'au moins une unité logique (307) sont installés dans le conteneur portable (308) ; et dans laquelle l'au moins une unité logique (307) est configurée pour lire l'au moins un instrument de pression (303), pour lire et commander l'au moins une vanne (304) et pour lire l'au moins un agencement d'écoulement (305), et dans laquelle l'au moins une unité logique (307) est configurée pour calculer le volume libre d'espace annulaire (301) sur la base de la différence de pression introduite dans le volume d'espace annulaire (102) et de la quantité de gaz ajoutée ou enlevée du volume d'espace annulaire (102) ; et dans laquelle l'unité automatisée portable est configurée pour réaliser automatiquement une détermination du volume libre d'espace annulaire lorsqu'elle est connectée au volume d'espace annulaire et qu'une séquence de test est lancée.

2. Unité (308) selon la revendication 1, **caractérisée en ce que** ladite unité automatisée portable comprend un écran connecté à l'unité logique (307), laquelle écran montre les données mesurées et affiche le volume libre d'espace annulaire (301) calculé.

3. Unité (308) selon l'une quelconque des revendications précédentes, **caractérisée en ce que** l'unité (308) mesure le volume libre d'espace annulaire (301) à l'aide d'une alimentation en gaz ou d'un gaz diffusé pour augmenter la pression dans le volume d'espace annulaire (102) de la colonne montante.

4. Unité (308) selon l'une quelconque des revendications précédentes, **caractérisée en ce que** l'unité (308) est utilisée pour une mesure de débit de la quantité d'un gaz diffusé à partir du volume d'espace annulaire (102).

5. Procédé de détermination d'un volume libre d'espace annulaire (301) dans une colonne montante (201) par l'utilisation de l'unité automatisée portable (308) selon les revendications 1 à 4, dans lequel le procédé comprend les étapes consistant à ;
- transporter ladite unité automatisée portable (308) vers une installation en mer,
- connecter l'unité portable automatisée (308) à un volume d'espace annulaire (102) de la colonne montante,
- introduire une pression dans le volume d'espace annulaire (102) par l'intermédiaire de la sortie/l'entrée de la colonne montante (302) au moyen de l'agencement d'écoulement (305) installé dans le conteneur de l'unité automatisée portable (308),
- lire le volume libre d'espace annulaire (301) mesuré sur un écran.
